# EUROPÄISCHE PATENTANMELDUNG

(11) **EP 0 582 809 A1**
(43) Veröffentlichungstag der Anmeldung: **16.02.1994**
(21) Anmeldenummer: 93109848.7
(22) Anmeldetag: 21.06.1993
(51) Int. Cl.: F02C 3/02

(54) **Verfahren zum Betrieb einer Gasturbine mit einer Druckwellenmaschine mit integrierter Verbrennung**

(30) Priorität: 06.08.1992 DE 4226028
(71) Anmelder: ASEA BROWN BOVERI AG, CH-5401 Baden (CH)
(72) Erfinder: Althaus, Rolf, Dr., CH-9230 Flawil (CH); Zauner, Erwin, Dr., CH-5400 Baden (CH)
(74) Vertreter: Klein, Ernest

(57) **Zusammenfassung**

Bei einer gasdynamischen Druckwellenmaschine, welche ein Zellenrad (13) mit einer Anzahl Zellen (14) enthält, in denen ein immer wiederkehrender Zündungs- und Verbrennungsprozess abläuft, soll der Zündungs- und Verbrennungsvorgang beschleunigt werden. Ferner soll eine solche Maschine auch betrieben werden können, wenn Brennstoff-Luftgemische verwendet werden, welche bei homogener Brennstoffverteilung aufgrund des zu hohen Luftüberschusses in der kurzen zur Verfügung stehenden Zeit nicht mehr gezündet und verbrannt werden können.

Es werden Schichten im Brennstoff-Luftgemisch erzeugt, welche im achsnormalen Querschnitt der Zellen (14) ein unterschiedliches Mischverhältnis zwischen Brennstoff und Luft aufweisen.

## Beschreibung

Die Erfindung betrifft ein Verfahren zum Betrieb einer Gasturbinenanlage, gemäss dem Oberbegriff des Anspruches 1.

Der Anmelderin ist eine Gasturbinenanlage bekannt, bei der zwischen einem Verdichter und einer mehrstufigen Gasturbine eine Druckwellenmaschine mit integrierter Verbrennung angeordnet ist. In der Druckwellenmaschine wird im Betrieb eine homogene Brennstoffverteilung in den Zellen eines Zellenrades erzeugt. Mit dieser bekannten Druckwellenmaschine ergeben sich Probleme, falls sehr magere Brennstoff-Luftgemische gezündet werden sollen. Solche mageren Gemische benötigen mehr Zeit zur Verbrennung und lassen sich daher in der kurzen, zur Verfügung stehenden Zeit nicht mehr zünden und verbrennen, denn bei mageren Brennstoff-Luftgemischen kann sich der Verbrennungsvorgang von der Zündstelle aus nur langsam fortpflanzen.

Die Aufgabe, welche mit dem vorliegenden Verfahren gelöst werden soll, besteht nun darin, den Verbrennungsvorgang auch in mageren Brennstoff-Luftgemischen zu beschleunigen und den Betrieb der Druckwellenmaschine so zu gestalten, dass auch magere Brennstoff-Luftgemische ohne Probleme in den Zellen einer Druckwellenmaschine in der kurzen zur Verfügung stehenden Zeit gezündet und verbrannt werden können.

Diese Aufgabe wird erfindungsgemäss durch ein Verfahren gelöst, das ausser den Merkmalen des Oberbegriffes auch die Merkmale des Kennzeichens im Anspruch 1 aufweist.

Da neben mageren schichten im Brennstoff-Luftgemisch auch fettere Schichten gebildet werden, kann sich der Verbrennungsvorgang in den fetteren Schichten schneller fortpflanzen, wodurch auch in den magereren schichten der Verbrennungsvorgang beschleunigt wird.

Dieses Verfahren hat somit den Vorteil, dass auch mit weniger Brennstoff, d.h. mit mageren Brennstoff-Luftgemischen der Verbrennungsvorgang beschleunigt werden kann und sich somit Brennstoff einsparen lässt.
a) Durch die Bildung von Teilmengen in den Zellen der Druckwellenmaschine mit einem grösseren Anteil des Brennstoffes, oder mit anderen Worten durch eine partielle Anfettung des Brennstoff-Luftgemisches z. B. im Querschnitt der Zellen gesehen, kann der immer wieder neu zu startende Zünd- und Verbrennungsvorgang verkürzt und stabilisiert werden. Durch die Verkürzung der Verbrennungszeit kann der Anstieg der NOx-Emissionen infolge partiell fetteren Gemisches zumindest teilweise kompensiert werden.
b) Jener Teil des Arbeitsgases, der in eine HochdruckTurbine geleitet wird, erfordert aufgrund der begrenzten Turbineneintrittstemperatur, insbesondere bei einer Konstantvolumen-Verbrennung, relativ magere Gemische. Durch lokale oder partielle Anfettung des Gemisches in der Querschnittsebene der Zellen gesehen, können daher auch solche relativ mageren Gemische sicher und rasch gezündet werden.
c) Wird eine radial veränderliche Brennstoffverteilung angewendet und der fettere Teil radial aussen angeordnet, so führt die nach der Verbrennung instabile Dichteschichtung im Fliehkraftfeld zu einer raschen Durchmischung des Gasgemisches, so dass am Austritt eine weitgehende gleichförmige Temperaturverteilung vorliegt.

Es können beispielsweise mindestens zwei Luftströme durch Trennwände gebildet werden und jedem Luftstrom können unterschiedliche Brennstoffmengen zugeführt werden. Die beiden Ströme des Brennstoff-Luftgemisches lassen sich mit gleicher Geschwindigkeit zusammenzuführen, d.h. isokinetisch.

Ein Ausführungsbeispiel einer Druckwellenmaschine für eine Gasturbinenanlage, welche nach dem erfindungsgemässen Verfahren arbeitet, ist im folgenden anhand der beigefügten Zeichnungen ausführlich beschrieben. Es zeigen:
- Fig.1: einen radialen Schnitt durch einen Teil des Zellenrades einer Druckwellenmaschine und
- Fig.2: eine Abwicklung des Zellenrades mit mehreren Zellen.

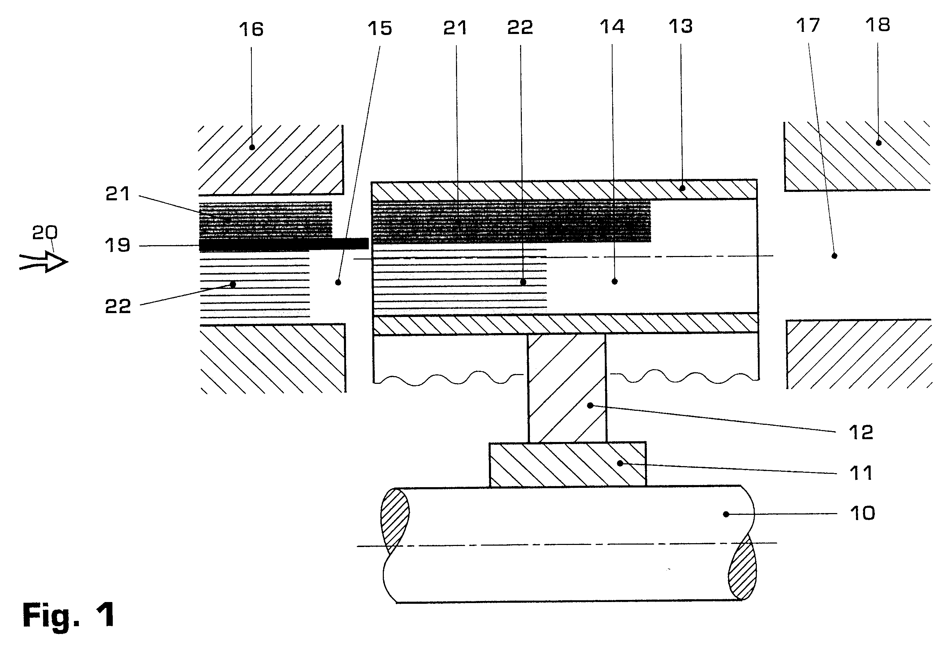

Gemäss Fig. 1 ist auf einer Welle 10 eine Habe befestigt, welche eine Radscheibe 12 trägt, an der ein Zellenrad 13 angeordnet ist. Von diesem Zellenrad 13 ist nur eine einzige Zelle 14 dargestellt. Heben diesem Zellenrad 13 befindet sich auf einer Seite ein luftseitiger, mit Eintrittsöffnungen 15 versehener seitenteil 16 und auf der anderen Seite ein gasseitiger, mit Austrittsöffnungen 17 versehener seitenteil 18. In der Zeichnung ist jeweils nur eine einzige Eintrittsöffnung 15 und eine einzige Austrittsöffnung 17 dargestellt. Entsprechend der Länge dieser Eintritts- und Austrittsöffnungen 15, 17 werden sie auch als Eintritts- und Austritts-Kanäle bezeichnet. Der Eintrittskanal 15 enthält eine Trennwand 19, wodurch ein Luftstrom 20 in einen radial äusseren Luftstrom 21 und einen radial inneren Luftstrom 22 aufgeteilt wird. Dem äusseren Luftstrom 21 wird mehr Brennstoff zugeführt, als dem inneren Luftstrom 22, wie in der Zeichnung durch eine abgestufte, schraffierte Fläche angedeutet ist. Somit wird im äusseren Luftstrom 21 ein fetteres Brennstoff-Luft-Gemisch erzeugt und im inneren Luftstrom 22 ein magereres Brennstoff-Luft-Gemisch erzeugt, wie ebenfalls durch eine stufenförmige schraffierte Fläche in der Zelle 14 angedeutet ist.

Es werden somit in jeder Zelle 14 gleichzeitig eine äussere Schicht mit einem fetteren Brennstoff-Luft-Gemisch und eine innere Schicht mit einem magereren Brennstoff-Luft-Gemisch erzeugt.

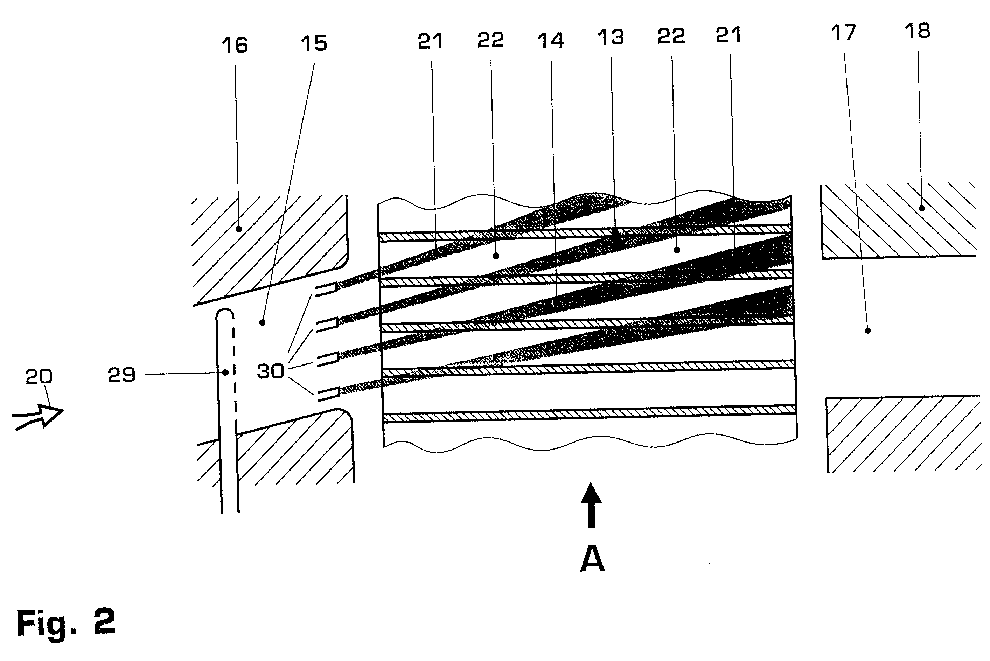

Gemäss Fig. 2 dreht sich das Zellenrad 13 mit den Zellen 14 in Richtung des Pfeiles A zwischen den beiden Seiten-teilen 16 und 18. Im Eintrittskanal 15 wird mit Hilfe einer Schlitzdüse 29 verdichtete Luft mit Brennstoff angereichert, so dass ein Brennstoff-Luftgemisch entsteht. Ferner wird mit Hilfe weiterer Düsen 30 das BrennstoffLuftgemisch schichtweise zusätzlich mit Brennstoff angereichert, so dass die in Fig. 1 dargestellte Schicht oder Teilmenge 21 eines fetteren Brennstoff-Luftgemisches und eine Schicht oder Teilmenge eines magereren BrennstoffLuftgemisches entsteht.

Es ist zu beachten, dass sich die Düsen 30 gemäss Fig. 2 näher am Zellenrad 13 mit den Zellen 14 befindet als die Schlitzdüse 29. Die Düsen 30 erzeugen sogenannte fette Strähnen 21 zwischen den magereren Schichten 22.

Durch die Anreicherung einer Teilmenge des gesamten Mengenstromes zu einem fetteren Brennstoff-Luft-Gemisch wird die Zündung und Verbrennung des gesamten Mengenstromes in einer Zelle 14 erleichtert und beschleunigt. In der Zelle 14 entsteht im radial äusseren Bereich eine Schicht mit einem fetteren Brennstoff-Luft-Gemisch als im radial inneren Bereich, der eine Schicht mit einem magereren Brennstoff-Luft-Gemisch aufweist.

Vorzugsweise wird eine Teilmenge eines homogenen mit Brennstoff angereicherten Mengenstromes zusätzlich mit Brennstoff angereichert.

Der Brennstoff wird mit Hilfe von nicht dargestellten Düsen zugeführt. Insbesondere kann eine erste Düse den gesamten Mengenstrom homogen mit Brennstoff anreichern und eine zweite Düse kann eine Teilmenge dieses Mengenstromes zusätzlich mit Brennstoff anreichern. Statt diesen beiden einzelnen Düsen können zwei Reihen von Düsen angeordnet werden. Eine erste Düsenreihe zur Erzeugung einer magereren Teilmenge und eine zweite Düsenreihe zur Erzeugung einer fetteren Teilmenge.

### Bezugsziffernliste

- 10: Welle
- 11: Habe
- 12: Radscheibe
- 13: Zellenrand
- 14: Zelle
- 15: Eintrittsöffnung
- 16: luftseitiger Seitenteil
- 17: Austrittsöffnung
- 18: gasseitiger Seitenteil
- 19: Trennwand
- 20: Luftstrom
- 21: äusserer Luftstrom
- 22: innerer Luftstrom
- 23: erste Düse Brennstoffdüse
- 24: zweite Düse Brennstoffdüse
- 25: äusserer Teil der Zelle 14
- 26: innerer Teil der Zelle 14
- 27: Hauptdüse
- 28: Anreicherungsdüse
- 29: Schlitzdüse
- 30: weitere Anreicherungsdüsen
- 31: Schlitzdüse

## Patentansprüche

1. Verfahren zum Betrieb einer Gasturbinenanlage, mit einem Verdichter, einer mit isocorer Verbrennung arbeitenden Druckwellenmaschine und einer mehrstufigen Turbine, wobei jeder Zelle der Druckwellenmaschine Gasteilmengen unterschiedlicher Zusammensetzung zugeführt werden, von denen eine ein Luftbrennstoff-Gemisch ist, und die Teilmengen nach Zündung und gemeinsamer Verdichtung aus der Zelle entlassen und der Turbine zugeführt werden, dadurch gekennzeichnet, dass jeder Zelle (14) mindestens zeitweise gleichzeitig eine schwächer mit Brennstoff angereicherte Teilmenge (22) und eine stärker mit Brennstoff angereicherte Teilmenge (21) zugeführt werden.

2. Verfahren nach Anspruch 1, dadurch gekennzeichnet, dass eine Teilmenge eines homogen mit Brennstoff angereicherten Mengenstromes zusätzlich mit Brennstoff angereichert wird, und dass diese Teilmenge gleichzeitig mit der Restmenge des homogen mit Brennstoff angereicherten Mengenstromes jeder Zelle (14) der Druckwellenmaschine zugeführt wird.
